**Europäisches Patentamt**

**European Patent Office**

**Office européen des brevets**

(19)

(11) **EP 1 237 322 A2**

(12) **EUROPEAN PATENT APPLICATION**

(43) Date of publication:
04.09.2002 Bulletin 2002/36

(51) Int Cl.$^7$: **H04L 9/06**, H04L 9/30

(21) Application number: 01119671.4

(22) Date of filing: 22.08.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 02.03.2001 JP 2001058087

(71) Applicant: **Hitachi, Ltd.**
**Chiyoda-ku, Tokyo 101-8010 (JP)**

(72) Inventors:
• **Kaminaga, Masahiro, New Marunouchi Bldg.**
**Chiyoda-ku, Tokyo 100-8220 (JP)**
• **Endo, Takashi, New Marunouchi Bldg.**
**Chiyoda-ku, Tokyo 100-8220 (JP)**
• **Watanabe, Takashi, New Marunouchi Bldg.**
**Chiyoda-ku, Tokyo 100-8220 (JP)**
• **Ohki, Masaru, New Marunouchi Bldg.**
**Chiyoda-ku, Tokyo 100-8220 (JP)**

(74) Representative: **Beetz & Partner Patentanwälte**
**Steinsdorfstrasse 10**
**80538 München (DE)**

(54) **Fault detection method for cryptographic process**

(57) The disclosed techniques are as shown below. The subject of the invention is to provide a crypto-processing method capable to confront an attack, which intentionally causes an erroneous operation and takes out secret information to be done against a device which performs a crypto-processing inside the device such as an IC card.

The solution means for such an attack is shown below. A ciphertext C is received through the I/O port on an IC card, etc. (step 601), the ciphertext C is stored on a RAM (step 602), a decryption process of the ciphertext C is performed (step 603), and the processing result Z is stored on a RAM (step 604). For the processing result Z, an encryption process is executed (step 605), and the processing result W and the original plaintext C are compared with each other (step 606). When the processing result W coincides with the original plaintext C, the plaintext Z is output to the I/O port (step 608), and if not, a reset is effected (step 607).

FIG.6

**Description**

BACKGROUND OF THE INVENTION

The present invention relates to a tamper-resistant fault detection method of IC cards, etc. having high security.

An IC card is a device which keeps personal information which is not allowed to tamper or performs encryption of data or decryption of a ciphertext with the use of secret crypto-keys. An IC card itself does not have its own power supply, and when it is inserted into a reader/writer for an IC card, power is supplied to the IC card and it is made operable. After it is made operable, the IC card receives commands transmitted from the reader/writer, and following the commands the IC card processes, for example, transfer of data. A general explanation of IC card is given in Junichi Mizusawa, "IC card", Ohm-sha, denshi-tsuushin-jouhou-gakkai-hen, etc.

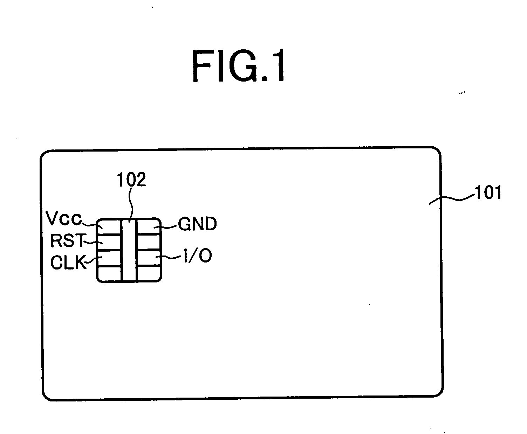

An IC card is constituted such that a chip 102 for an IC card is mounted on a card 101 as shown in Fig. 1. In general, an IC card comprises a power supply terminal VCC, a grounding terminal GND, a reset terminal RST, an input/output terminal I/O, and a clock pulse terminal CLK at the positions determined by the ISO7816 standards, and through these terminals an IC card is supplied power from a reader/writer or communicates with it (Refer to W. Rankl and Effing: Smartcard Handbook, John Wiley & AMP; SONS, 1997, PP. 41).

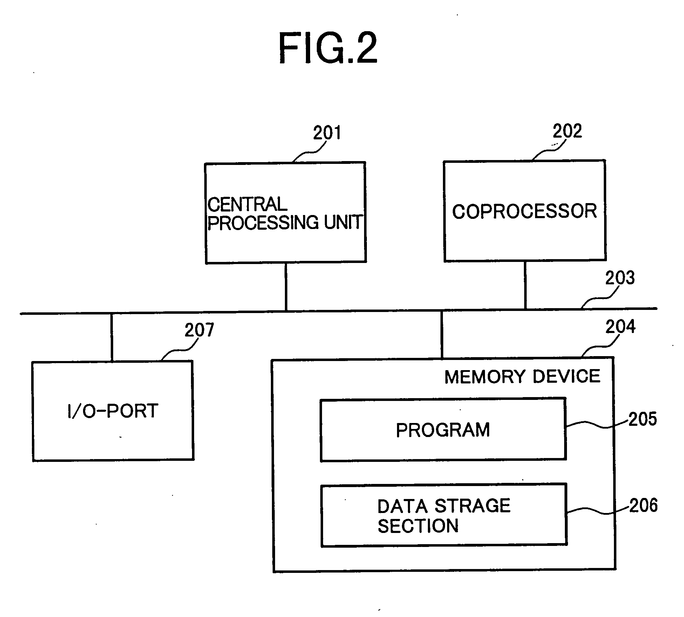

The configuration of a chip for an IC card is basically the same as that of a typical microcomputer. The configuration is, as shown in Fig. 2, composed of a central processing unit(CPU) 201, a memory device 204, an input/output(I/O) port 207, and a coprocessor 202 (in some case, there is no coprocessor). The CPU 201 is a device which performs logical operation, arithmetical operation, etc. The memory device 204 is a device which stores programs, data, etc. The input/output port is a device which communicates with the reader/writer. The coprocessor is a device which performs crypto-processing itself or performs operation necessary for crypto-processing with a high speed. There is, for example, a special calculator for performing residue operation of RSA cryptogram or a cipher device which performs round processing of DES cryptogram. Some of the processors for IC cards comprise no coprocessor. A data bus 203 is a bus which connect respective devices to each other.

The memory device 204 is composed of ROM (read only memory), RAM (random access memory), EEPROM (electrical erasable programmable read only memory), etc. ROM is a memory which is not changeable and it is mainly used for storing programs. RAM is a memory which can be freely rewritable but when the power supply thereof is off, the stored contents of the RAM are erased. When an IC card is drawn out of a reader/writer, since the power supply is made off, the contents of the RAM disappear. EEPROM is a memory which holds the contents even when the power supply is stopped. EEPROM is used to store the data which are to be held thereon even when it is disconnected from the reader/writer in a case where rewriting is needed. For example, the number of prepaid times of a prepaid-card is rewritten every time it is used, and the data should be held even when it is taken off from the reader/writer. Therefore such data must be held on an EEPROM.

An IC card has programs and/or other important information enclosed in the chip, and is used to store important information or to perform crypto-processing therein. Conventionally, the difficulties to decrypt a ciphertext in an IC card have been considered to be equivalent to those to decrypt a cipher-algorithm.

However, at present there is a probability that a key used in a ciphertext or secret information stored in an IC card is taken out by intentionally causing an error with the use of abnormal clock pulses, an abnormal voltage, an abnormal electromagnetic wave, an abnormal temperature, etc. while an IC card is performing crypto-processing, which has become a threat. On such a threat, you will refer to John Wiley & AMP; SONS, W. Rankl & AMP; W, Effing, "Smart Card Handbook" pp 263 (Active Protective Mechanisms). The more detailed discussion on such an attack is described in Ross Anderson, Markus Gunter Kuhn: "Tamper-Resistance --- a Cautionary Note", the Second Usenix Workshop on Electric Commerce Proceedings, pp. 1-11, 1996. In particular, on the RSA crypto-processing with the use of the CRT (Chinese Remainder Theorem) the issue is described in Marc Joye, Arjen K. Lenstra, and Jean-Jaques Quisquater, "Chinese Remaindering Based Cryptosystems in the Presence of Faults". On this paper, detailed explanation will be given in the "Preferred Embodiments" according to the present invention.

A method for preventing from such an attack is to have a special built-in hardware in an IC card and detect an abnormal environment. Because of this reason, the majority of IC cards now being used in the market comprise various kinds of built-in abnormal environment detectors.

Another method for preventing from such an attack with hardware is to attach a parity bit to an internal register, etc. When an abnormal phenomenon is detected by parity check, returning of an abnormal processing result is prevented by reset, etc. This method is mainly adopted as a countermeasure against errors in a large scale computer, but because of the restricted space of a chip, the method is rarely adopted by an IC card.

However, the countermeasure which uses an abnormal-environment detector has a limit in the dynamic characteristics of the detector, and it is not easy to detect an instantaneous power fault or instantaneous abnormality of clock pulses. In the case of the detection with the use of parity check, it is not possible to detect the erroneous operation caused by the reversal of 2 bits.

SUMMARY OF THE INVENTION

The main object of the present invention is to detect an erroneous operation which occurs in a IC card chip with a method according to the crypto-processing technique without using an abnormal-environment detector nor a parity detector. The point aimed at by the present invention is that before the output of the encrypted result, the result is decrypted again to a plaintext and when the plaintext is identical to the original plaintext, the ciphertext is output, and if the plaintext differs from the original one the processing result caused by an erroneous operation is not output to the external device. The detection method according to the present invention is not able to protect programs from erroneous operations as the abnormal environment detector or the parity detector does, but the erroneous operation in the crypto-processing portion in which the most important information is processed can be detected beyond the detection limit of the abnormal-environment detector or the parity detector.

An object of the present invention is to solve the above mentioned problem.

A tamper-resistant apparatus represented by an IC card chip comprises a storage device having a program-storage portion which stores programs and a data-storage portion which stores data, and a central processing unit (CPU) which performs data processing by executing designated processes following the programs. The apparatus can be understood as an information processing device in which the programs, composed of processing instructions giving execution orders to the CPU, provide one or more data processing means. An IC card stores information which requires high security such as personal information and the function of an electronic money. Therefore, an IC card incorporates crypto-processing unit or crypto-software. In this meaning, an IC card, as a device, can be grasped as an crypto-processing module. Cryptosystems can be largely divided into 2 kinds; one uses the same key for encryption and for decryption which is called a symmetric cryptosystem or a secret key cryptosystem. Another one uses different keys from each other for encryption and for decryption, and the system is called an asymmetric cryptosystem or a public key cryptosystem. The latter is a technique specially used for electronic authentication, etc.

In the present invention, the method of detecting an erroneous operation during encryption processing is that before the output of the encryptioned result, the ciphertext is again decrypted to a plaintext and compared with the original text, and when they are identical to each other, the ciphertext is output and when they are different, the result of the encryption-process is not output to the external device.

To be more specific, in a case where a symmetric cryptosystem, for example DES-cryptosystem is used, which at present is used like a standard (for example, Eiji Okamoto "Anngou-riron-nyuumon" pp. 33 - 50, Kyoritsu-shuppan), an IC card receives a ciphertext C, performs a conventional DES operation of an inverse transformation, INV_DES using a secret key K stored in the card chip, and finds a plaintext Z = INV_DES (C, K).

DES is a sequence of scramble operation composed of 16 rounds, and the scramble operation is composed of permutation and substitution. An inverse transformation can be constituted by the inverse operation of the DES scramble operation. Therefore, when the decryption-process INV-DES (C, K) is performed correctly, DES(Z, K) = C should be established. Then after the processing result W of DES(Z, K) is stored on a RAM, etc., the W and the C are compared with each other, and if W = C, Z is found to be a correct processing result and it is output to an external device. But if W differs from C, the result is not output. Inversely, it is needles to say that when a plaintext is encrypted, the result can be confirmed by decryption.

On the other hand, in the case of an asymmetric cryptosystem, when RSA cryptosystem is taken for example, an IC card (in the case of typical electric signature using IC card, small public exponent E (3 or 65537) is used for encryption) calculates C = RSA (M, (E, N)) = M^E MOD N for a plaintext M with the use of a public exponent E and a public modulus N, and the calculated result is made a ciphertext. In this place, A^B means Bth power of A. This ciphertext C is received by an IC card owned by a possessor of a public key information J = (E, N), and the ciphertext C is decrypted by the operation INV_RSA(C, X, J) = C^X MOD N = M with the use of a secret exponent X held in the IC card, and the processing result Z is obtained. In general, concerning the security of an IC card, a secret exponent X stored in the card chip is an attack target, and if an erroneous operation occurs in the decryption process, the information concerning X leaks out of the card. In order to prevent such a leakage, the calculation result Z is not output immediately but the result is once stored on a RAM, etc. and the encryption-process result W and the ciphertext C are compared with each other, and when W = C, the plaintext Z is found to be a correct processing result, and it is output as a correct processing result. When W differs from C, the result is not output.

When the above description is taken into consideration, the gist of the present invention is to confirm if the original text is obtained or not by performing a reversal operation for an encryption or decryption operation, that is, for an encryption operation by performing a decryption operation; and for a decryption operation by performing an encryption operation. Therefore, it is not an essential problem that the kind of cryptosystem is DES or RSA. In short, in any other secret key cryptosystem or public key cryptosystem an erroneous operation can be detected in the same manner with the process - operation and reversal operation as shown in the above.

BRIEF DESCRIPTION OF THE DRAWINGS

Fig. 1 shows a general view of an IC card and terminals thereon;
Fig. 2 shows a configuration of a microcomputer;
Fig. 3 shows an illustrative view for explaining the DES encryption processing technique;
Fig. 4 shows an illustrative view for explaining the DES-decryption-processing technique;
Fig. 5 shows a processing procedure in the embodiment of an error detection method for DES-encryption;
Fig. 6 shows a processing procedure in the embodiment of an error detection method for DES-decryption;
Fig. 7 shows a processing procedure in the embodiment of an error detection method for the encryption of a general secret key cryptosystem;
Fig. 8 shows a processing procedure in the embodiment of an error detection method for the decryption of a general secret key cryptosystem;

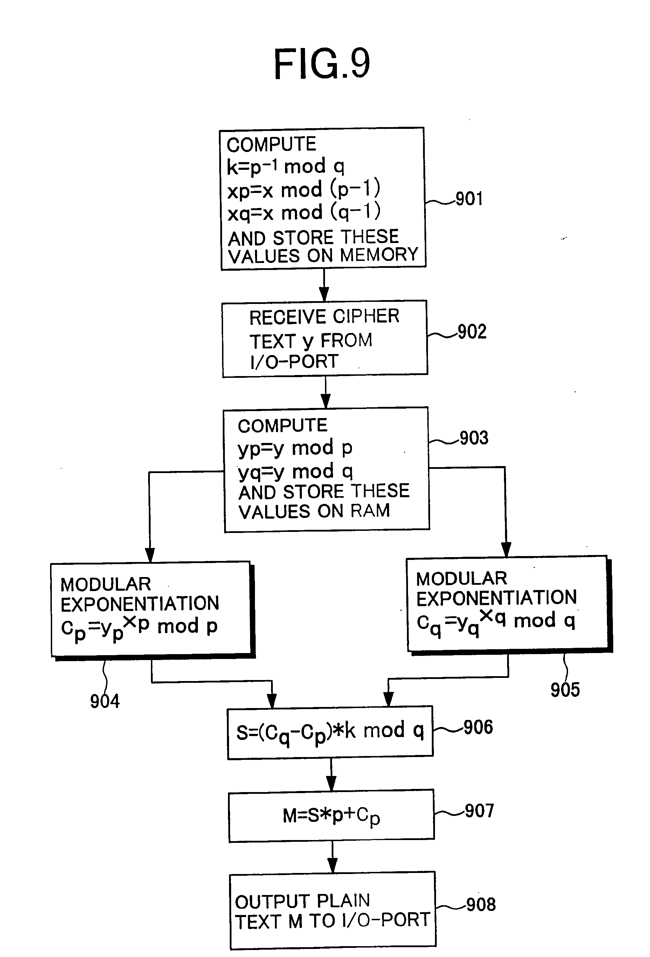

Fig. 9 shows a processing procedure in the RSA-modular exponentiation calculation in which CRT (Chinese Remainder Theorem) is used;
Fig. 10 shows a processing procedure in the embodiment for an error detection method for the RSA-decryption calculation in which CRT (Chinese Remainder Theorem) is used;
Fig. 11 shows forms of elliptic curves;
Fig. 12 shows an illustrative view for explaining addition on an elliptic curve;
Fig. 13 shows a processing procedure in the embodiment for an error detection method for the decryption-operation in an elliptic RSA cryptosystem; and
Fig. 14 shows a processing procedure in the embodiment for an error detection method for the decryption-operation in the general asymmetric cryptosystem.

DESCRIPTION OF THE PREFERRED EMBODIMENTS

In the present embodiment, DES cryptosystem, a representative example in the secret key cryptosystem, will be described as an example. In this place, DES system is adopted simply as a representative example in the secret key cryptosystem, and therefore the present invention can be applied to any secret key system other than the DES system in the secret key cryptosystem.

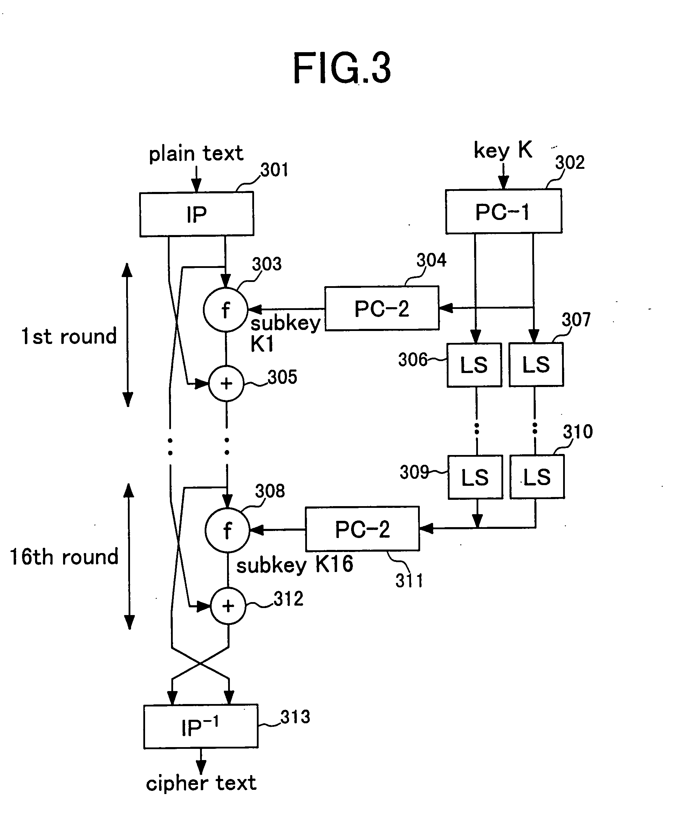

Fig. 3 shows the fundamental structure of DES system. In the DES a key K composed of 64 bits (8 bits out of 64 bits are used for parity bits, so that significant bit length of the key is 56 bits) are deformed by bit permutations 302, 304, and a subkey K1 at a first step is formed. The deformed key bits by permutation 302 are deformed by left-rotation 306 and 307 every half bits, and they are given the same bit-permutation (PC-2) as the bit-permutation 304 to produce a subkey K2. These operations are repeated and finally at a 16th step, in the same manner, the derived key bits are deformed by left-rotation 309 and 310 every half bits, and they are given the same bit-permutation 311 as the bit-permutation 304 to produce a subkey K 16. On the other hand, the plaintext of 64 bits are separated to 2 groups of 32 bits, left and right, after an initial permutation IP301 is executed. The right side half is substituted into a nonlinear transformation called F-function 303 together with the subkey K1, and the result and every bit on the left side half are exclusive-ORed (305). The results become 32 bits on the right side half for a second round, and the right side half bits in the output of the above-mentioned initial permutation 301 are made to be the left-side half 32 bits for the second round. And so forth, the same operation is repeated. Finally, the output of 15th round is deformed by the subkey K16, and after the exchange of right side and the left side, the result is substituted into the reversal permutation 313 of the initial permutation IP to output a ciphertext of 64 bits.

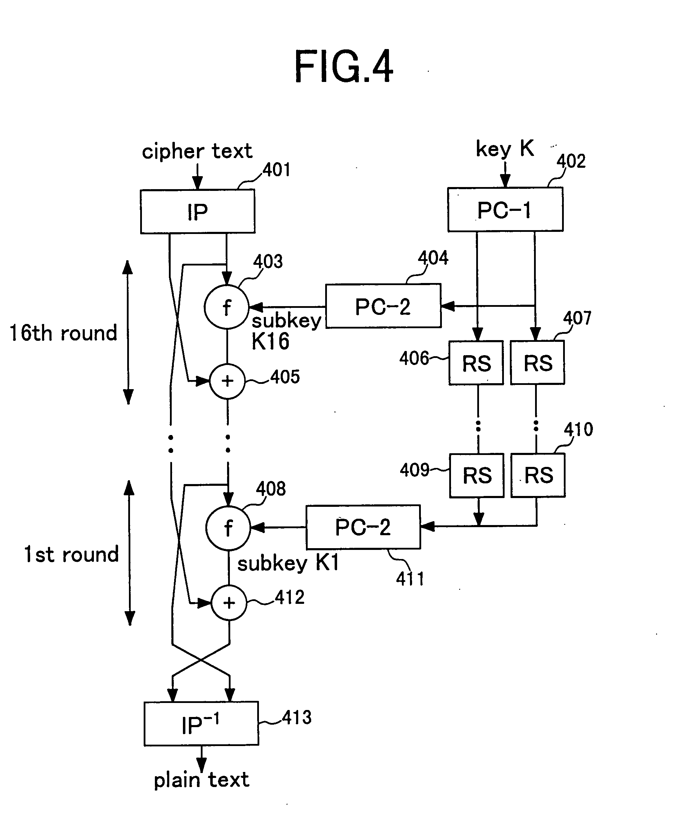

The decryption transformation INV_DES is capable of being constituted as shown in Fig. 4. The difference from Fig. 3 is that the process is started from the process in 16th round. Accordingly, the portions deformed by the left-rotations 306, 307, 309, 310 are conversely made to perform right-rotation 406, 407, 409, 410. Subkeys are used in the inverse order to that of the encryption transformation as K16, K15, -----, K1. This operation means that every process shown in Fig. 3 is performed in the inverse direction.

For example, let us assume that in an encryption transformation at the 16th round, a specific process bit is reversed by an error. At this time, according to the contents of subkey K16 used in the 16th round, the processing result at the time of the reverse changes. When the relation between the reversed processing result and the K16 is closely investigated, a mathematical relation is found between them. By solving these relations through the simultaneous equations for a plurality of input, the number of candidates of K16 can be largely decreased. If K16 can be specified, to decide the key K of the DES, the remaining 8 shall be decided; therefore, at the highest, if $2^8 = 256$ kinds of cases are tried, the correct solution can be decided.

Since differential fault analysis for the DES cryptosystem is quite complicated, only the outline was shown here.

To make an attack like this, an attacker has to analyze the result of encryption or decryption. A key K and a ciphertext Z corresponding to a plaintext M are generally stored in a RAM temporarily and after that they are output through the I/O terminal of an IC card. Attackers provoke erroneous operation by the application of an abnormal voltage, abnormal clock pulses, abnormal electromagnetic waves, etc. during the encrypting process. Therefore, when error injection is successful, the obtained result Z is not a correct processing result, DES (M, K), but it shall be another different value. Conversely speaking, when the result is a correct value, the attacker obtains nothing.

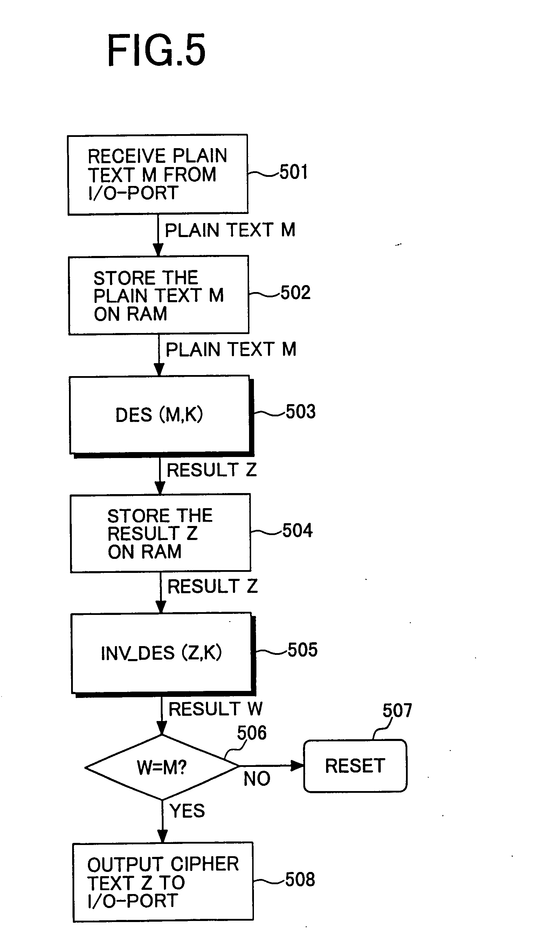

The detection of an erroneous operation becomes possible by the use of the above-mentioned property. For example, a process as shown in Fig. 5 may be performed. In other words, a plaintext M is received through the I/O port (step 501), and then it is stored in a RAM (step 502). The plaintext M is, together with the secret key K stored in a memory on an IC card (in general EEPROM), processed by an encryption process (step 503). The result Z obtained in the process performed in step 503 is stored on a RAM (step 504), and the result Z is subjected to the DES decryption process (step 505) to obtain the processing result W. The result W is compared with M (step 506), and when both values coincide with each other, Z is output through the I/O port (step 508). If not, the card chip is reset (step 507). If the DES is regarded as the mapping from a number of 64 bits to a number of 64 bits with a key K fixed, the transformation is a bijection. Therefore, there is no other case to be W = M other than the case where Z coincides with a correct DES (M, K). In other words, if any error occurs caused by an erroneous operation in the DES processing result, the error is surely detected by the observation of the decryption result, and reset is taken effect. In this case, an attacker is not able to obtain an erroneous processing result which is necessary for an attack, and he is not able to execute an attack. This is one of embodiments according to the present invention.

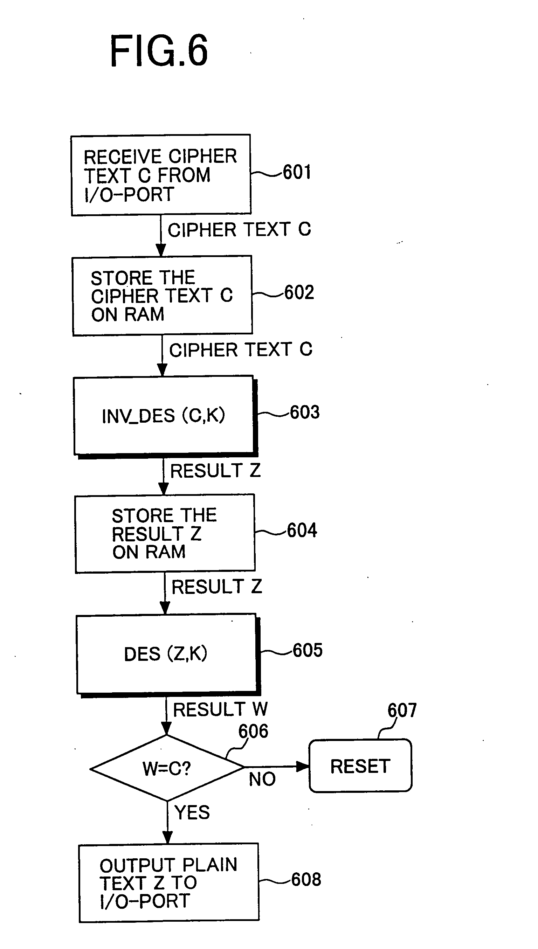

The concept for the detection of erroneous operation in the case of decryption process is quite the same as the case of encryption. In other words as shown in Fig. 6, a ciphertext C is received through the I/O port (step 601). This ciphertext C is stored on a RAM (step 602). The ciphertext C is, together with a secret key K stored in a memory on an IC card (in general EEPROM), subjected to a DES decryption process (603). The result Z of the process performed in step 603 is stored on a RAM (step 604), and the result Z of the process is processed by the DES encryption process (step 605) to obtain a processing result W. The W and the C are compared (step 606), and when both coincide with each other, Z is output from the I/O port (step 608). If not, the chip is reset (step 607). In other words, if there is any error caused by an erroneous operation in the DES decryption process result, the error is surely detected by the observation of the encryption processing result and reset is taken effect. In this case, the attacker is not able to obtain a wrong processing result which is necessary for an attack, and the attack is not able to be executed. This is one of embodiments according to the present invention.

The above fact will be confirmed simply by a numerical example. The calculation of the DES is too complicated to trace it manually, so that it will be explained referring to "Introduction to the Cryptographic Theory" by Eiji Okamoto p. 42, Kyoritsu Shuppan. In order to simplify the explanation, only the check of the calculation for decryption will be executed.

It is known that the output M for the key K = F234AEB545B1A830 (hexadecimal number), and the ciphertext C = 3CC0BAE8226AF5D1 (hexadecimal number) is 0952E3934CF0CB1E (hexadecimal number). It is assumed that one bit in the M has been changed by some cause or other and became a different value 0952E3934CF0CB1F (hexadecimal number). When this number is encrypted again, it becomes 9602F43C1283633B (This calculation result is not one shown on any table. It is necessary to calculate actually with a computer). This value is clearly different from the original value C = 3CC0BAE8226AF5D1, and the detection has succeeded.

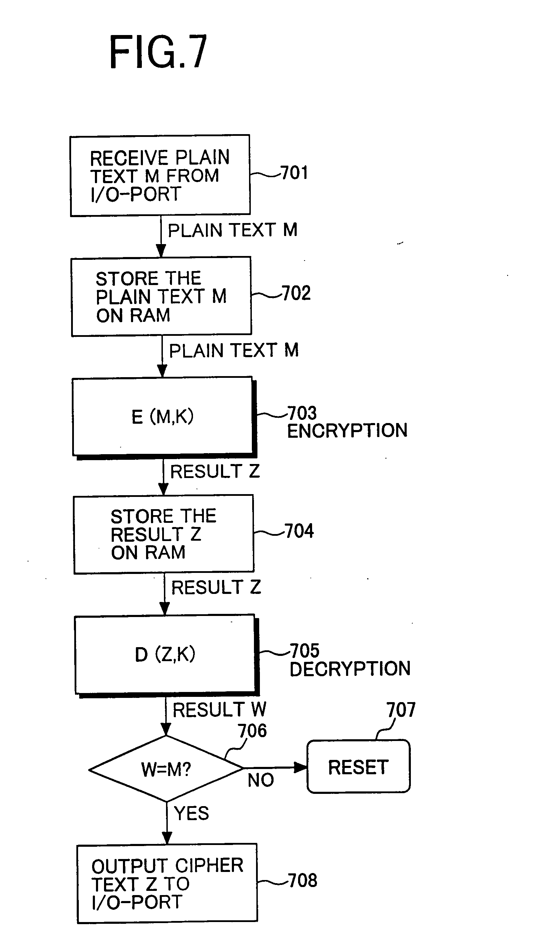

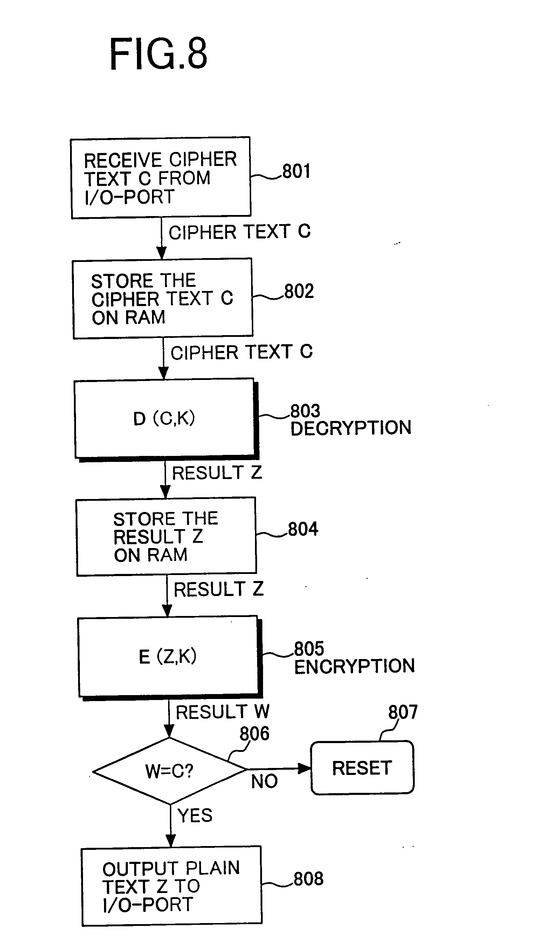

When we observe a series of the above processes, we can easily understand that whether the kind of cryptosystem is DES is not an essential factor, and if an encryption process and its decryption process are given, the present invention can be effectively applied to any system. This is shown in Figs. 7 and 8.

As shown in Fig. 7, a plaintext M is received through the I/O port (step 701), and the plaintext M is stored on a RAM (step 702). The plaintext M is, together with the secret key K stored in the memory on an IC card (in general EEPROM), is processed by an encryption process (step 703). The result Z of the process in step 703 is stored on a RAM (step 704), and the process result Z is given a decryption process (step 705) to obtain the result W. Then W and M is compared with each other (step 706). If they coincide with each other, Z is output from the I/O port (step 708), and if not, reset is effected (step 707). In other words, if there is an error caused by an erroneous operation in the process result in the encryption process (step 703), the error is detected by the observation of the encryption processing result and reset is caused. In this case, an attacker is not able to obtain an erroneous process result which is necessary for an attack, and he cannot execute an attack. This is one of embodiments according to the present invention.

The concept for the detection of erroneous operation in the case of a decryption process is the same as the above. As shown in Fig. 8, a ciphertext C is received through the I/O port (step 801), and the ciphertext C is stored on a RAM (step 802). The ciphertext C is, together with the secret key K stored in the memory (in general EEPROM), processed by a decryption process (step 803). The result Z of the process performed in step 803 is stored on a RAM (step 804), and the processing result Z is given an encryption processing (step 805) to obtain the result W. The W and C are compared with each other (step 806). If they coincide with each other, Z is output from the I/O port (step 808). If not, reset is effected (step 807). In other words, if there is an error caused by an erroneous operation in the decryption process result, the error is detected by the observation of the encryption rocess result, and a reset is caused. At this time, attacker cannot obtain an erroneous processing result which is necessary for an attack, and he cannot execute an attack. This is one of embodiments according to the present invention.

In the above embodiment, when an erroneous operation is detected, a reset action is taken, but this is nothing to do with the gist of the present invention. For example, it is needless to say that without resetting the chip, a constant value which has not any relation with a crypto-processing may be output.

In some case, the concept in the present invention can be applied to a part of the encryption process or decryption process. For example, in order to judge if any error has occurred or not, for example, during a permutation process, it is also possible to detect an erroneous operation by operating an inverse-permutation process.

Next, the case of an asymmetric cryptosystem will be explained. Among the attacks which utilize erroneous operations for asymmetric cryptosystem, the most typical one is the attack for the RSA encryption process utilizing CRT (Chinese Remainder Theorem). In this place, the principle on an attack will be explained for the understanding of such issues. About RSA cryptosystem and CRT, detailed explanations are given in Eiji Okamoto, "Introduction to the Cryptographic Theory", Kyoritsu Shuppan, and A.J.Menezes and P.C. Van Oorshot, S.A.Vanstone, "Handbook of Applied Cryptography, (CRC-Press)

The RSA cryptosystem will be briefly explained. In the RSA cryptograms, a product N of 2 large primes P and Q, for example 512 bits each, and the number E (in many IC cards, 3 or 65537 is used) which is mutually prime with N are adopted. These numbers N and E are registered on a public key database as a public key. In this situation, a transmitting person B sends the data (a plaintext) M expressed by a number of larger than 1 and smaller than N-1 in an encrypted form,

$$Y = M^E \ MOD \ N$$

to the possessor A of the public key, where M^E is an expression showing Eth power of M. The possessor A who receives the ciphertext Y calculates Y^X MOD N with the secret key X, wherein the following equation is established:

$$XE \ MOD \ (P-1)(Q-1) = 1$$

In this place, (P-1)(Q-1) is the value of Euler's function F(N).

This value is equal to the number of positive integers which are mutually prime with N. According to the Euler's theorem,

$$Y^{((P-1)(Q-1))} \ MOD \ N = 1$$

is established. On the other hand, we can write

$$XE = 1 + K(P-1) \ (Q-1) \ \text{-----} \ (K \ \text{is an integer}).$$

Thus, the following equation is established:

$$Y\text{^}X \ MOD \ N$$

$$=\ (M\text{^}E)\text{^}X \ MOD \ N$$

$$=\ M\text{^}(EX) \ MOD \ N$$

$$=\ M\text{^}(1\ +\ K(P\ -\ 1)(Q\ -\ 1))\ MOD\ N$$

$$=\ M*M\text{^}(K(P\ -\ 1)(Q\ -\ 1))\ MOD\ N$$

$$=\ M$$

Therefore, the possessor A is able to restore the original plaintext M from the transmitter B by the calculation of "Y^X MOD N". In this case, when the secret key X is calculated, the prime numbers P and Q of N are used. At present, the method of calculation of X without using the factorization of prime numbers is not known and further to factorize the product of large prime numbers needs inartistic long period of time, so that even if N is opened to the public, the secret key of A is considered to be safe from any attack.

In the case of an IC card, 3 or 65537 is often used as a public exponent E. One of the reasons is to shorten the calculation time but there is another reason that even if an attacker knows the value of E, which does not mean that a secret exponent X or prime factors of N are directly exposed to danger.

As the method of calculation, Addition Chain method or the like is often adopted (Refer to the above-mentioned "Introduction to the Cryptographic Theory"); however with such an algorithm, the calculation speed is slow and the time needed for the transaction utilizing an IC card might exceed the allowable limit of a user.

Therefore, it is the CRT to produce M from the result of modular exponentiation for 2 prime factors, P and Q, of the public modulus N instead of simply performing the modular exponentiation for X and N.

The CRT process will be briefly explained referring to Fig, 9. At first, the following values used in the calculation are calculated:

$K = P\text{^}(-1) \ MOD \ Q$, $XP = X \ MOD \ (P-1)$, and $XQ = X \ MOD \ (Q-1)$ will be calculated. Usually these values are stored on an EEPROM. Next, a ciphertext Y is received through the I/O port (step 902), and the remainders of ciphertext Y: $YP = Y \ MOD \ P$ and $YQ = Y \ MOD \ Q$ are calculated with the use of prime factors P and Q as moduli, and these values are stored on a RAM (step 903). Next, two calculations of modular exponentiations are performed (steps 904 and 905):

$$CP = YP\text{^}XP \ MOD \ P, \qquad CQ = YQ\text{^}XQ \ MOD \ Q.$$

Next recombination calculation is performed (steps 906 and 907) :

$$S = (CQ - CP)*K \ MOD \ P$$

$$M = S*P + CP,$$

and then M is returned (step 908). This M coincides with the actual "Y^X MOD N".

This fact will be confirmed numerically. Put the ciphertext Y = 79, N = 187 (11 * 17), X = 107. This X is a reciprocal of E = 3 for the Euler function value of N : (11-1)*(17-1) = 160. In this case, a real value is as follows.

```
M = 79^107 MOD 187

  = 79^(5*3*7 + 2) MOD 187

  = 79^2*(79^5 MOD 187)^(3*7) MOD 187

  = 79^2*10^(3*7) MOD 187

  = 79^2*(10^3 MOD 187)^7 MOD 187

  = 79^2*(65^7 MOD 187) MOD 187

  = 79^2*142 MOD 187

  = 29
```

This value will be calculated with the use of CRT. Since 11*14 MOD 17 = 1, then K = 11^(-1) MOD 17 = 14, XP = 107 MOD (11-1) = 7, and XQ = 107 MOD (17-1) = 11. Also we obtain YP = 79 MOD 11 = 2 and YQ = 79 MOD 17 = 11. Since

$$CP = 2^7 \text{ MOD } 11 = 7$$

$$CQ = 11^{11} \text{ MOD } 17 = 12,$$

we obtain S = (12-7)*14 MOD 17 = 2

$$M = 2 * 11 + 7 = 29,$$

and this result coincides with the previous value.

When CRT is used, the reason why we are able to accelerate the process speed is that: in the modular exponentiation calculation, the quantity of computation increases in proportion to the third power of the data length; in contrast to this in the case of CRT, a half of the data length is calculated twice; therefore the quantity of computation is 1/8 when compared with that in the case of modular exponentiation calculation. In the case of CRT, even when the calculation is executed twice the total quantity of computation becomes 1/4 of that of the modular exponentiation calculation (1/8×2=1/4). In an actual case, since it is necessary to perform the transformation of data or recombination calculation, the speed in the case of CRT is not graded up to 4 times, but actually it becomes in the order of 3 times.

The method of attack shown by Dr, A. K. Lenstra is explained below. At first, an IC card is operated normally and a correct calculation value M is obtained. Next, it is assumed that at the recombination calculating portion (step 907) S has become a wrong value since an erroneous operation is caused during the calculation. We put the value of S changed by an error as S[ERROR] and the corresponding output value as M[ERROR], then the attacker obtains the following 2 values:

$$M = S*P + CP$$

$$M[ERROR] = S[ERROR]*P + CP$$

The difference between these 2 values is

$$M[ERROR] - M = (S[ERROR] - S)*P$$

In short the value of the result is a multiple of the prime factor P. Therefore, the following equation is established:

$$P = GCD (M[ERROR] - M, N)$$

Where GCD(A, B) means the greatest common divider between A and B.

The error can be anything so far as it changes the value of S and does not change the value of CP. In short, if any one among the calculated value of YQ, the calculated value of CQ, or calculated value of (CQ - CP)*K MOD Q is different from the original value, the above-mentioned attack will succeed.

It will be shown numerically that with this method the factorization of a modulus is actually possible. Let us recall the numerical example shown in the previous pages. In the previous example we obtained, the ciphertext Y = 79, N = 187(=11*17), X = 107. In that case, the actual value was 29, and also we obtained K = 11^(-1) MOD 17 = 14, XP = 107 MOD (11-1) = 7, XQ = 107 MOD (17-1) = 11, YP = 79 MOD 11 = 2, YQ = 79 MOD 17 = 11.

It is assumed that the calculation of CQ caused an erroneous operation and it changed the value to 11. CP = 2^7 MOD 11 = 7 is a normal value. At this time,
S = (11 - 7)*14 MOD 17 = 5 is obtained. Therefore, M[ERROR] = 5*11 + 7 = 62 is output. At this time, the following equation is established:

$$GCD (62 - 29, 187) = GCD (33, 187) = 11$$

Thus the prime factor 11 of the modulus N is obtained.

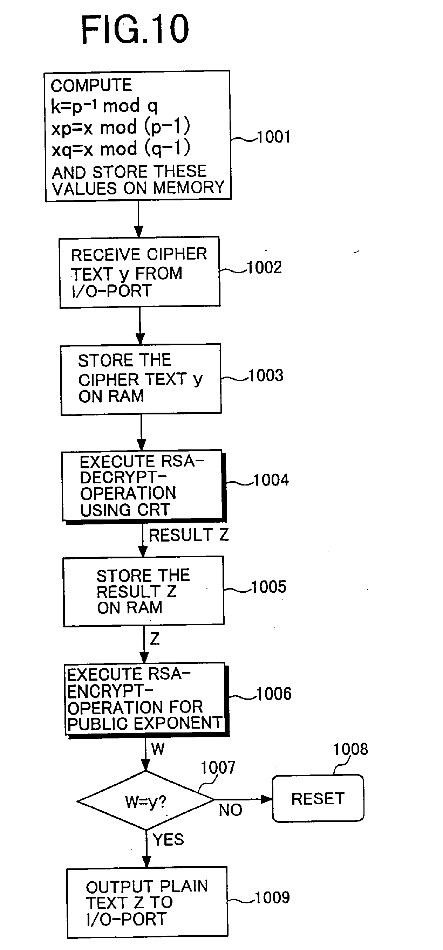

In the present invention, the phenomenon as described in the above is detected as shown below. As shown in Fig. 10, at the preparatory operation 1001 of the CRT, we calculate K = P^(-1) MOD Q, XP = X MOD (P-1), XQ = X MOD (Q-1) and store them in a memory (step 1001). Next, a ciphertext Y is received through the I/O port (1002) and the ciphertext Y is stored on a RAM (step 1003). Next,. for the ciphertext Y an RSA decryption calculation Y^X MOD N is performed with the use of CRT (step 1004). The operation result Z is stored on a RAM (step 1005). The operation result Z has a probability that it contains an error. For the operation result Z on the RAM, encryption calculation Z^E MOD N is executed (step 1006) and compares the ciphertext Y on the RAM with the encryption result W if they coincide or not (step 1007). When they coincide with each other, a plaintext Z is output to the I/O port (step 1009). If not, a reset is effected (step 1008). This is one of embodiments according to the present invention.

However, an error can be detected by the above method only when Y and the modulus N are mutually prime. This is easily known from the Euler's theorem. If Y and the modulus N are not mutually prime, what is encrypted with the decryption result might not return to the original value. In this case, even when there is no error, the error detection system shown in Fig. 10 causes a reset.

However, the probability of occurring such a case as mentioned in the above is almost negligibly small. Actually, the number of positive integers less than N which is mutually prime with N = PQ is P+Q-2 pieces since the multiples of P is Q-1 pieces and the multiples of Q is P-1 pieces, but this number is only (P+Q-2)/N = (P+Q-2)/PQ, which is approximately (1/P) + (1/Q), a very small number. The key bit length in the present major RSA cryptosystem is 1024 bits; so that the bit length of the prime factors P and Q is 512 bits each. Therefore, the probability of the above case is approximately $2^{-511}$, and this number can be said negligible small.

In the present embodiment, CRT is taken as an example but how to detect an error according to the present invention has nothing to do with CRT, and the invention is also effective in any RSA system. Further, a general public key cryptosystem is able to utilize the invention. In the following as an example, the RSA cryptosystem on an elliptic curve will be cited.

There are detailed explanations in the reference materials: on the elliptic cryptosystem, Neal Koblitz, "A Course in Number Theory and Cryptography," Graduate Texts in Mathematics 114, Springer-Verlag, 1994; on the arithmetic operation on an elliptic curve, Joseph H. Silverman and John Tate, "Rational Points on Elliptic Curve", Springer-Verlag, 1992; and on an algebraic system of a group, a ring, a field, etc., Kazuo Matsuzaka, "Daisuukei-Nyuumon, Iwanami Shoten".

Before detailed explanation, a brief explanation on the elliptic cryptosystem will be given. An elliptic curve is a zero point set of a polynomial of the third order defined on a field K, and when the characteristic of K is not 2, it has a standard form shown below.

$$Y^2 = X^3 + AX^2 + BX + C$$

When the characteristic of K is 2, it has the standard forms shown below.

$$Y^2 + CY = X^3 + AX + B$$

or

$$Y^2 + XY = X^3 + AX + B$$

(In both cases, the point at infinity O, to be explained later, shall be included in consideration)

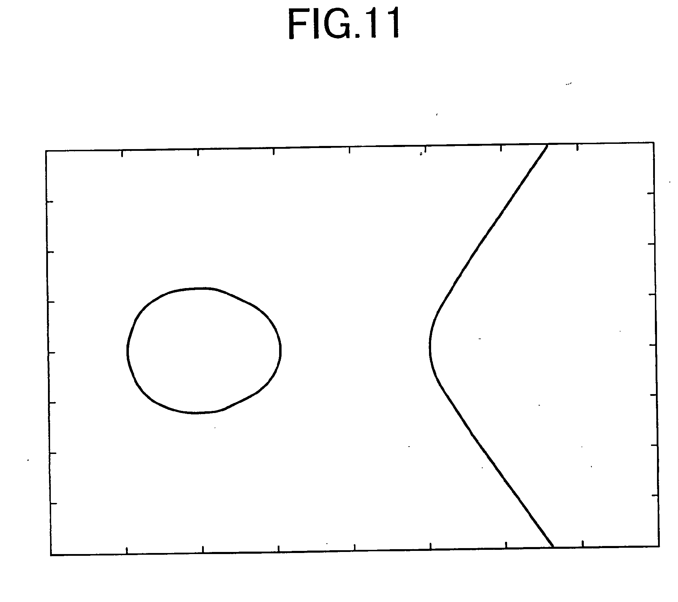

The shape of an elliptic curve is as shown in Fig. 11. In the present invention, it is not an essential matter whether the characteristic is 2 or not 2. Therefore, for simplification the case where the characteristic is not 2 will be explained. Further cryptogram requires only finite field, so that explanation will be given only to that case. A field composed of finite number of elements is called a finite field or a Galois field, and the structure is well known to the public. The simplest constitution is shown below.

At first we consider a quotient ring ZP of an integer ring with a prime P being modulus. In ZP, since every element excepting O comprises the inverse, it has the structure of a field. This is called a prime field and is written as FP. This is the most primitive example of a finite field.

Next, a polynomial F(X) having the elements of FP as its coefficients is considered, and by adding what is not included in FP among the zero points to FP a new field can be constituted. This is called a finite-degree algebraic extension field of FP. It is known that the number of elements in a finite-degree algebraic extension field is the power of P. When we put the number of elements as Q, in some case a finite-degree algebraic extension field may be expressed as FQ.

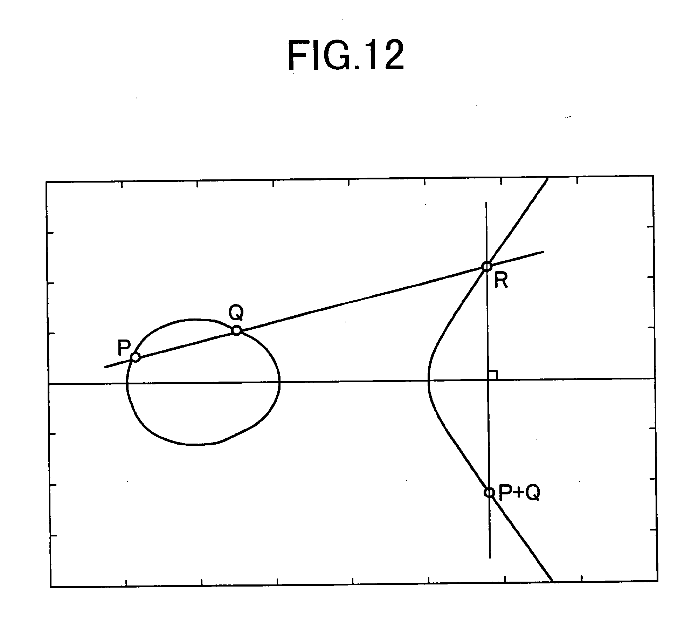

Arithmetic operations can be defined on two points on an elliptic curve. As shown in Fig. 12, when there are 2 points, P and Q, on an elliptic curve, draw a straight line through the 2 points (when P = Q, draw a tangent line). Put the intersection point of the straight line with another elliptic curve as R. Because of the symmetry of the elliptic curve with respect to X axis, the symmetrical point of R with respect to the X axis is also a point on the elliptic curve. This point is written as P+Q and this point is defined as the "sum" of P and Q. In a case where there is no intersection point, we consider, as a virtual point, a point at infinity and regard the straight line and the elliptic curve intersect at the virtual point. We write the infinity point "0". A point which is at a symmetric position of a point P on an elliptic curve with respect to X axis is called an inverse element, and expressed with -P. With the use of this "sum", what is made by adding a point P K times is written as KP. What is made by adding a point -P K times is written as -KP. KP or -KP is called a scalar multiple of P. The coordinates of these points can be expressed by rational expression of the coordinates of points P and Q; therefore, it is possible to consider these arithmetic operations on a general field. This "summation" is similar to the ordinary summation, where the combination law and the commutative law are established. Concerning this summation, the point at infinity O plays the role of zero in the same way as an operation with ordinary numbers. When -P is added to P, 0 can be obtained. This shows that an additional operation on an elliptic curve has a structure of Abelian group. This may be called a Mordell-Weil group. When an elliptic curve E and a defining field FQ are fixed, Mordell-Weil group may be written G(E/FQ). The structure of G(E/FQ) is very simple and it is known that it becomes an isomorphism of a cyclic group or a direct product of 2 cyclic groups.

In general, even if the value of KP = Q is known, finding the value of K is not easy because a huge quantity of computation is needed. This is called a discrete logarithm problem on an elliptic curve. The elliptic curve cryptogram is based on the difficulties to solve the discrete logarithm problem on an elliptic curve.

There are many kinds of cryptosystems utilizing elliptic curves, but in this place, in particular, an elliptic RSA cryptographic technique will be explained. In the elliptic RSA cryptographic method, it is necessary to handle an elliptic curve on a ring. In the case of the elliptic curve on a ring, it is known that it is possible to perform Mordell-Weil group operation with the use of the formally identical expression to that on a finite field.

A user makes 2 large primes P,Q ($P \equiv 2$ (MOD 3), $Q \equiv 2$ (MOD 3)) and finds N = P Q, M = LCM (P + 1, Q + 1). Then he defines $E \in ZM(= Z/MZ)$, GCD(E, M) = 1 properly and calculates $D = E^{(-1)}$ MOD M. (E, N) is opened and D or P, Q is kept as a secret key.

The encryption is performed as shown below. M = (MX, MY) $\in$ ZN x ZN is assumed to be a plaintext. An elliptic curve on a ring ZN is put

$$E: Y^2 = X^3 + B,$$

and when we consider the addition on an elliptic curve, we find that the addition of points does not depend on the value of B. Then we put $B = MY^2 - MX^3$ MOD N. Then M can be regarded as a point on E. On the above setting, the operation on an elliptic curve is performed:

$$C = EM$$

The above operation is an encryption process.

In the case of a decryption process, M = DC may be calculated. It is able to certify that this operation performs a decryption process as in the case of the RSA cryptosystem, but it is necessary to utilize the fact that the order of E is P+1. For more in detail, for example, refer to Mr. Tatsuaki Okamoto and Mr. Hirosuke Yamamoto, "Gendai-Angou", Sangyou-tosho.

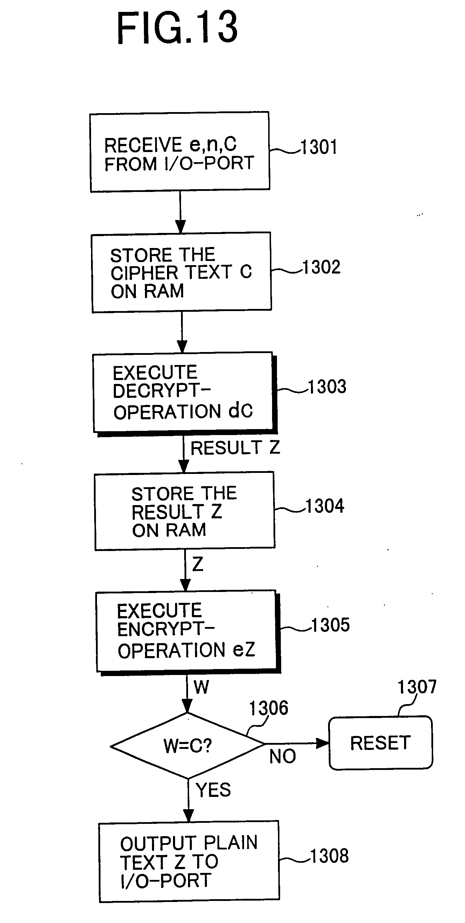

In the case of the above elliptic RSA cryptogram, an error detection method which has occurred in the decryption process will be explained. As shown in Fig. 13, at first, public keys, E, N, and a ciphertext C are received through an I/O port (step 1301), and the ciphertext C is stored on a RAM (step 1302). In a decryption calculation (step 1303), DC is calculated with the use of a secret key D. There is a probability that an error is included in DC. The process result is put Z, and for the Z, w = EZ is found in the encryption calculation (step 1305). If the Z is a correct value, W must be equal to C. Then when W = C, Z is output to the I/O port (step 1308). If not, a reset is effected. This is one of embodiments according to the present invention.

The processing methods mentioned in the above are the embodiments of what is considered to be identical to each other in an abstract level, and it is natural to generalize them beyond the respective cryptosystem.

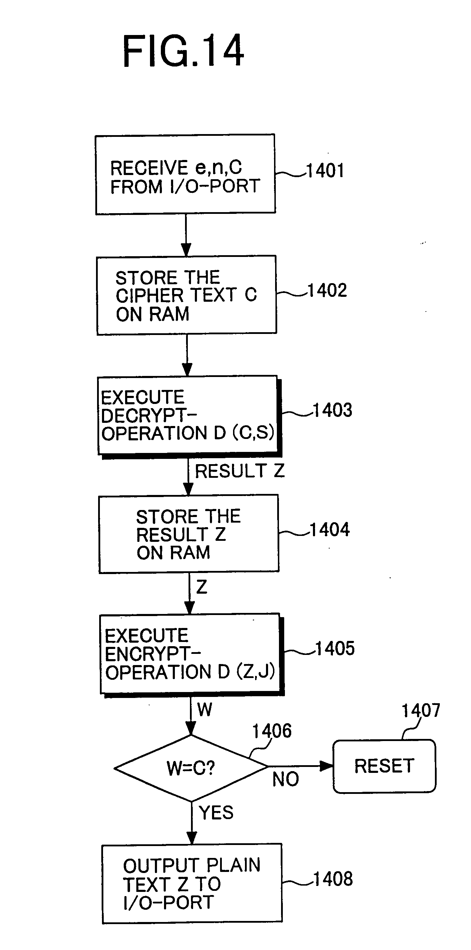

In the following, the above-mentioned abstracted error detection method will be explained referring to Fig. 14. At first, the public key information J and a ciphertext C are received through the I/O port (step 1401), the ciphertext C is stored on a RAM (step 1402). In a decryption calculation (step 1403), the decrypted result D (C, S) is calculated using the secret key information S. There is a probability that an error is included in the decryption result. We put the processing result Z, and for the Z, we will find W = E(Z, J) in the encryption calculation (step 1405). If Z has a correct value, W must be equal to C. Then if W = C the Z is output to the I/O port (step 1408). If not, a reset is forced (step 1407).

Attention must be paid to the fact that the process shown in Fig. 14, is not capable to be applied to any asymmetric cryptosystem. Actually in the case of an elliptic curve ELGAMAL (Elliptic curve ElGamal) cryptosystem, inverse calculation is not easily possible, so that the technique according to the present invention is not able to apply to this cryptosystem.

As mentioned in the above, in the embodiments according to the present invention, they confirm if the original text is obtained or not by performing a reversal operation for an encryption or decryption operation, that is, for an encryption operation by performing decryption operation; and for a decryption operation by performing encryption operation. Therefore they can encounter the attacks to IC cards, etc. by means of fault detection.

**Claims**

1.  A processing method for performing a symmetric-key encryption process utilizing an information processing device, comprising the steps of:

    (1) performing an encryption process Z = E (M, K) in which a secret key K is to be applied to an input plaintext M, and for storing a processing result Z in a memory;
    (2) performing a decryption process W = D (Z, K) for said process result Z on said memory and storing the decryption result W on the memory;
    (3) outputting said processing result Z when said processing result W coincides with said plaintext M; and
    (4) suppressing the output of said processing result when said processing result W does not coincide with said plaintext M.

2.  An encryption processing method of claim 1 wherein said encryption process and said decryption process are executed according to the DES (data encryption standard).

3.  An encryption processing method of claim 1 wherein said information processing device is reset as a control method of suppressing the output of said processing result.

4.  An encryption processing method of claim 1 wherein said information processing device and said memory are respectively an arithmetic processing unit and a storage unit to be mounted on an IC card.

5.  A method for performing symmetric key decryption process utilizing an information processing device, comprising the steps of:

    (1) performing a decryption process Z = D (C, K) wherein a secret key K is to be applied to an input ciphertext C, and storing the processing result Z on a memory;
    (2) performing an encryption process W = E (Z, K) for the processing result Z on said memory, and storing the result W on the memory;
    (3) outputting said processing result Z when said processing result W coincides with said ciphertext C; and
    (4) suppressing the output of said processing result when said processing result W does not coincide with said ciphertext C.

6.  A decryption processing method of claim 5 wherein said encryption process and said decryption process are executed according to the DES (data encryption standard).

7.  An encryption processing method of claim 5 wherein said information processing device is reset as a method of suppressing the output of said processing result.

8.  An encryption processing method of claim 5 wherein said information processing device and said memory are respectively an arithmetic processing unit and a storage unit to be mounted on an IC card.

9.  A method for performing an asymmetric key decryption process utilizing an information processing device, comprising the steps of:

    (1) performing a decryption process Z = D (C, X, J) wherein a secret key X and a public key information J are to be applied to an input ciphertext C and storing the result Z in a memory;
    (2) performing an encryption process W = E (Z, J) for the result Z on said memory and storing said result W on the memory;
    (3) outputting the processing result Z when said processing result W coincides with said ciphertext C; and
    (4) suppressing the output of the processing result when said processing result W does not coincide with the ciphertext C.

10. An encryption processing method of claim 9 wherein said encryption process and said decryption process are executed according to RSA cryptosystem.

11. An encryption processing method of claim 9 wherein said information processing device is reset as a method of suppressing the output of said processing result.

12. An encryption processing method of claim 9 wherein said information processing device and said memory apparatus are respectively an arithmetic processing unit and a storage unit to be mounted on an IC card.

# FIG.1

# FIG.2

201

202

CENTRAL
PROCESSING UNIT

COPROCESSOR

203

207

204

I/O-PORT

MEMORY DEVICE

PROGRAM

205

DATA STRAGE
SECTION

206

# FIG.3

plain text            key K

IP — 301       PC-1 — 302

1st round

f — 303

subkey K1    PC-2 — 304

LS — 306    LS — 307

+ — 305

LS — 309    LS — 310

16th round

f — 308

PC-2 — 311

subkey K16

+ — 312

IP⁻¹ — 313

cipher text

# FIG.4

cipher text → IP (401)

key K → PC-1 (402)

16th round

f (403) ← subkey K16 ← PC-2 (404) ← PC-1

+ (405)

RS (406) RS (407)

⋮ ⋮

RS (409) RS (410)

1st round

f (408) ← subkey K1 ← PC-2 (411)

+ (412)

IP⁻¹ (413)

→ plain text

# FIG.5

```
┌─────────────────┐
│ RECEIVE PLAIN   │
│ TEXT M FROM     │──501
│ I/O-PORT        │
└─────────────────┘
         │
         │ PLAIN TEXT M
         ▼
┌─────────────────┐
│ STORE THE       │
│ PLAIN TEXT M    │──502
│ ON RAM          │
└─────────────────┘
         │
         │ PLAIN TEXT M
         ▼
┌─────────────────┐
│                 │
│   DES (M,K)     │──503
│                 │
└─────────────────┘
         │
         │ RESULT Z
         ▼
┌─────────────────┐
│ STORE THE       │
│ RESULT Z        │──504
│ ON RAM          │
└─────────────────┘
         │
         │ RESULT Z
         ▼
┌─────────────────┐
│                 │
│  INV_DES (Z,K)  │──505
│                 │
└─────────────────┘
         │
         │ RESULT W           507
         ▼         506          │
        ╱╲                   ┌────────┐
       ╱  ╲      NO          │        │
      ╱ W=M?╲──────────────▶ │ RESET  │
       ╲  ╱                  │        │
        ╲╱                   └────────┘
         │ YES
         ▼
┌─────────────────┐
│ OUTPUT CIPHER   │
│ TEXT Z TO       │──508
│ I/O-PORT        │
└─────────────────┘
```

# FIG.6

RECEIVE CIPHER TEXT C FROM I/O-PORT — 601

CIPHER TEXT C

STORE THE CIPHER TEXT C ON RAM — 602

CIPHER TEXT C

INV_DES (C,K) — 603

RESULT Z

STORE THE RESULT Z ON RAM — 604

RESULT Z

DES (Z,K) — 605

RESULT W

W=C? — 606

NO → RESET — 607

YES

OUTPUT PLAIN TEXT Z TO I/O-PORT — 608

# FIG.7

RECEIVE PLAIN
TEXT M FROM
I/O-PORT
~701

PLAIN TEXT M

STORE THE
PLAIN TEXT M
ON RAM
~702

PLAIN TEXT M

E (M,K)
~703
ENCRYPTION

RESULT Z

STORE THE
RESULT Z
ON RAM
~704

RESULT Z

D (Z,K)
~705
DECRYPTION

RESULT W

707

706

W=M?  NO  →  RESET

YES

OUTPUT CIPHER
TEXT Z TO
I/O-PORT
~708

# FIG.8

RECEIVE CIPHER
TEXT C FROM
I/O-PORT — 801

↓ CIPHER TEXT C

STORE THE
CIPHER TEXT C
ON RAM — 802

↓ CIPHER TEXT C

D (C,K) — 803 DECRYPTION

↓ RESULT Z

STORE THE
RESULT Z
ON RAM — 804

↓ RESULT Z

E (Z,K) — 805 ENCRYPTION

↓ RESULT W

806 W=C? — NO → RESET 807

↓ YES

OUTPUT PLAIN
TEXT Z TO
I/O-PORT — 808

# FIG.9

COMPUTE
$k=p^{-1} \bmod q$
$xp = x \bmod (p-1)$
$xq = x \bmod (q-1)$
AND STORE THESE
VALUES ON MEMORY — 901

RECEIVE CIPHER
TEXT y FROM
I/O-PORT — 902

COMPUTE
$yp = y \bmod p$
$yq = y \bmod q$
AND STORE THESE
VALUES ON RAM — 903

MODULAR
EXPONENTIATION
$c_p = y_p{}^{xp} \bmod p$ — 904

MODULAR
EXPONENTIATION
$c_q = y_q{}^{xq} \bmod q$ — 905

$S = (C_q - C_p) * k \bmod q$ — 906

$M = S * p + C_p$ — 907

OUTPUT PLAIN
TEXT M TO I/O-PORT — 908

# FIG.10

COMPUTE
$k=p^{-1} \bmod q$
$xp=x \bmod (p-1)$
$xq=x \bmod (q-1)$
AND STORE THESE
VALUES ON MEMORY —1001

↓

RECEIVE CIPHER
TEXT y FROM
I/O-PORT —1002

↓

STORE THE
CIPHER TEXT y
ON RAM —1003

↓

EXECUTE RSA-
DECRYPT-
OPERATION
USING CRT —1004

RESULT Z

↓

STORE THE
RESULT Z
ON RAM —1005

Z

↓

EXECUTE RSA-
ENCRYPT-
OPERATION FOR
PUBLIC EXPONENT —1006

W

1007 W=y? —NO→ RESET 1008

YES

↓

OUTPUT PLAIN
TEXT Z TO
I/O-PORT —1009

# FIG.11

# FIG.12

EP 1 237 322 A2

# FIG.13

RECEIVE e,n,C
FROM I/O-PORT ⎯1301

STORE THE
CIPHER TEXT C
ON RAM ⎯1302

EXECUTE
DECRYPT-
OPERATION dC ⎯1303

RESULT Z

STORE THE
RESULT Z
ON RAM ⎯1304

Z

EXECUTE
ENCRYPT-
OPERATION eZ ⎯1305

W

1306   1307

W=C? ── NO ──→ RESET

YES

OUTPUT PLAIN
TEXT Z TO
I/O-PORT ⎯1308

26

# FIG.14

RECEIVE e,n,C
FROM I/O-PORT — 1401

↓

STORE THE
CIPHER TEXT C
ON RAM — 1402

↓

EXECUTE
DECRYPT-
OPERATION D (C,S) — 1403

↓ RESULT Z

STORE THE
RESULT Z
ON RAM — 1404

↓ Z

EXECUTE
ENCRYPT-
OPERATION D (Z,J) — 1405

↓ W

W=C? — 1406 — NO → RESET — 1407

↓ YES

OUTPUT PLAIN
TEXT Z TO
I/O-PORT — 1408